# EUROPÄISCHE PATENTANMELDUNG

(11) **EP 1 371 885 A2**
(43) Veröffentlichungstag der Anmeldung: **17.12.2003**
(21) Anmeldenummer: 03012986.0
(22) Anmeldetag: 07.06.2003
(51) Int. Cl.: F16K 1/12

(54) **Koaxialventil**

(30) Priorität: 14.06.2002 DE 10227550
(71) Anmelder: müller co-ax ag, 74670 Forchtenberg (DE)
(72) Erfinder: Wagner, Ewald, 74653 Ingelfingen (DE)
(74) Vertreter: Patentanwälte Ruff, Wilhelm, Beier, Dauster & Partner

(57) **Zusammenfassung**

Ein Koaxialventil mit einem in einem Ventilgehäuse (1) linear bewegbaren mit einem Ventilsitz (2) zusammenwirkenden Ventilschließkörper (3) enthält einen mechanischen Antrieb (11), der außerhalb des Ventilgehäuses (1) angeordnet ist und durch eine Öffnung in der Wand des Ventilgehäuses mechanisch mit dem Ventilschließkörper (3) verbunden ist. Die Verbindung kann durch eine direkte mechanische Kopplung oder auch durch ein Getriebe erfolgen. Bei dem Antrieb kann es sich um einen Linearantrieb, einen Rotationsantrieb oder eine sonstige Antriebsmöglichkeit handeln.

## Beschreibung

Die Erfindung geht aus von einem Koaxialventil. Koaxialventile haben üblicherweise ein rohrförmiges Ventilgehäuse, in dem ein ebenfalls rohrförmiger Ventilschließkörper mit einem Ventilsitz zusammenwirkt. Die bekannten Koaxialventile dieser Art haben meistens einen magnetischen Antrieb, bei dem die Spule direkt am oder im Gehäuse angeordnet ist. Diese Art des Antriebs bietet sich wegen der rohrförmigen Ausbildung des Ventilgehäuses an.

Der Erfindung liegt die Aufgabe zu Grunde, andere Arten des Antriebs von Koaxialventilen vorzuschlagen.

Zur Lösung dieser Aufgabe schlägt die Erfindung ein Koaxialventil mit den im Anspruch 1 genannten Merkmalen vor. Weiterbildungen der Erfindung sind Gegenstand von Unteransprüchen.

Die Erfindung schafft ein Koaxialventil, das andere Arten des Antriebs aufweisen kann, also auch dann anwendbar ist, wenn aus bestimmten Gründen ein elektromagnetischer Antrieb nicht gewünscht wird. Durch das Anordnen des Ventilantriebs außerhalb des Ventilgehäuses wird es möglich, das Ventil auch so zu gestalten, dass es mit unterschiedlichen Antrieben für unterschiedliche Anwendungsgebiete verwendet werden kann. Durch die mechanische Verbindung des Ventilantriebs mit dem Ventilschließkörper durch die Wand des Ventilgehäuses hindurch wird es möglich, auch den Antrieb bei bestehenden Installationen auszutauschen, zu warten oder dergleichen.

Die Art der Anbringung des Ventilantriebs kann beliebig gestaltet werden. Insbesondere ist es sinnvoll und liegt im Rahmen der Erfindung, den Ventilantrieb in einem eigenen Antriebsgehäuse anzuordnen und unterzubringen, das mit dem Ventilgehäuse verbunden ist, beispielsweise direkt an dem Ventilgehäuse angebracht ist. Dadurch kann auch die Öffnung in der Wand des Ventilgehäuses, durch die hindurch der Ventilantrieb auf den Ventilschließkörper zugreift, nach außen hin abgedichtet werden.

Zur Verbindung des Ventilantriebs mit dem Ventilschließkörper kann beispielsweise ein Übertragungselement dienen, das eine mechanische Verbindung zwischen den beiden Elementen herstellt. Es kann sich dabei um ein starres Übertragungselement oder auch um ein unabhängig bewegbares Übertragungselement, beispielsweise einen Hebel, handeln. Das Übertragungselement kann so gestaltet sein, dass es die unterschiedlichen Anforderungen der Bewegung des Ventilantriebs und des Ventilschließkörpers berücksichtigen kann. Beispielsweise hat der Ventilantrieb einen gegenüber dem Ventilschließkörper unterschiedlich großen Hub.

Als Ventilantrieb kann insbesondere in Weiterbildung der Erfindung ein Linearantrieb Anwendung finden, insbesondere ein Druckmittelzylinder. Mit Linearantrieben lassen sich mit geringem Aufwand die entsprechenden Bewegungen verwirklichen. Der Ventilschließkörper soll schließlich linear angetrieben und bewegt werden.

In Weiterbildung der Erfindung kann insbesondere vorgesehen sein, dass die Bewegungsrichtung des Ventilantriebs parallel zur Bewegungsrichtung des Ventilschließkörpers verläuft. Hier kann dann als einfaches Übertragungselement ein Mitnahmeelement Anwendung finden, oder auch ein zweiarmiger Hebel. Die Bewegung von Antrieb und Ventilschließkörper kann gleich gerichtet oder auch entgegengesetzt gerichtet verlaufen.

Es ist aber ebenfalls möglich und liegt im Rahmen der Erfindung, dass die Bewegungsrichtung des Ventilantriebs quer zur Bewegungsrichtung des Ventilschließkörpers verläuft. Dies kann unter Umständen je nach dem zur Verfügung stehenden Platz auch eine sinnvolle Möglichkeit sein.

Es wurde eingangs erwähnt, dass als Ventilantrieb ein Linearantrieb Verwendung finden kann, da die zu verwirklichende Bewegung des Ventilschließkörpers schließlich eine lineare Bewegung sein soll. Zur Verwirklichung des Linearantriebs kann aber nicht nur ein Druckmittelzylinder verwendet werden, sondern es ist auch möglich, eine lineare Bewegung mit Hilfe eines Drehantriebs zu verwirklichen, also beispielsweise ein Elektromotors. Daher schlägt die Erfindung in Weiterbildung vor, dass der Ventilantrieb auch einen Drehantrieb aufweisen kann, sowohl zur Verwirklichung eines Linearantriebs als auch zur Verwirklichung eines Drehantriebs.

In nochmaliger Weiterbildung der Erfindung kann vorgesehen sein, dass der Ventilantrieb über ein Getriebe mit den Ventilschließkörper verbunden wird. Das eingangs erwähnte Übertragungselement, das zur mechanischen Verbindung dient, wird also als ein auch komplizierteres Getriebe ausgebildet und/oder durch ein solches Getriebe ersetzt. Mit Hilfe von Getrieben lassen sich unterschiedliche Bewegungscharakteristiken, auch unterschiedliche Wege und unterschiedliche Übersetzungen verwirklichen.

Beispielsweise kann in Weiterbildung der Erfindung ein Getriebe verwendet werden, das mindestens ein Zahnrad aufweist, das in eine Verzahnung des Ventilschließkörpers eingreift.

Es ist ebenfalls möglich, dass das Getriebe mindestens ein Zahnrad aufweist, das in eine Verzahnung des Antriebskolbens bei einem Druckmittelzylinder eingreift.

Es wird erfindungsgemäß auch ermöglicht, einen Linearantrieb mit Hilfe eines Getriebes mit dem Ventilschließkörper zu verbinden.

Eine weitere Möglichkeit zur Verbindung zwischen dem Ventilantrieb und dem Ventilschließkörper kann dadurch gebildet werden, dass das Getriebe mindestens eine Nockenbahn und mindestens einen mit dieser Nockenbahn zusammenwirkenden Nocken aufweist. Aus Symmetriegründen können selbstverständlich auch mehrere Nockenbahnen und mehrere Nocken Anwendung finden. Beispielsweise kann die Nockenbahn und/oder der Nocken an einem linear bewegbaren Schieber angeordnet sein. Dieser Schieber kann dann wiederum entweder von einem Linearantrieb oder mit Hilfe eines Getriebes von einem Elektromotor angetrieben werden.

Eine weitere Möglichkeit besteht darin, dass die Nockenbahn und/oder der Nocken an einer Drehhülse angeordnet ist, die also mit Hilfe von Nocken und Nockenbahn verdreht wird.

Es kann erfindungsgemäß ebenfalls vorgesehen sein, dass das Getriebe eine in ein Gewinde des Ventilschließkörpers eingreifende durch den Antrieb verdrehbare Gewindehülse aufweist.

Eine weitere von der Erfindung vorgeschlagene Möglichkeit zur Verwirklichung des Antriebs des Ventilschließkörpers schlägt vor, dass das Getriebe einen Exzenter aufweist, der in eine entsprechende Aufnahme eingreift, insbesondere eine Nut. Diese Nut kann vorzugsweise am Ventilschließkörper angebracht sein.

Der Antrieb des von der Erfindung vorgeschlagenen Koaxialventils kann mit Vorteil so ausgebildet sein, dass der Ventilschließkörper eine reine translatorische Bewegung durchführt, also ohne eine Drehung. Falls dies aber gewünscht ist, kann der Antrieb auch so gestaltet werden, dass der Ventilschließkörper bei seiner Translationsbewegung auch eine vorgegebene Drehung durchführt.

Weitere Merkmale, Einzelheiten und Vorzüge der Erfindung ergeben sich aus der folgenden Beschreibung bevorzugter Ausführungsformen der Erfindung, den Patentansprüchen und der Zusammenfassung, deren Wortlaut durch Bezugnahme zum Inhalt der Beschreibung gemacht wird, sowie anhand der Zeichnung. Hierbei zeigen:
- Figur 1: einen schematischen Längsschnitt durch ein von der Erfindung vorgeschlagenes Koaxialventil nach einer ersten Ausführungsform;
- Figur 2: stark vereinfacht einen Querschnitt durch die Anordnung der Figur 1;
- Figur 3: eine der Figur 2 entsprechende Darstellung bei einer zweiten Ausführungsform;
- Figur 4: vereinfacht einen Längsschnitt durch die Anordnung der Figur 3;
- Figur 5: einen vereinfachten Längsschnitt durch eine dritte Ausführungsform in einer ersten Position;
- Figur 6: einen der Figur 5 entsprechenden Schnitt in einer zweiten Position des entsprechenden Ventils;
- Figur 7: schematisch das Zusammenwirken von Ventilschließkörper und Antrieb;
- Figur 8: eine Stirnansicht der Ausführungsform der Figuren 5 bis 7;
- Figur 9: eine der Figur 5 entsprechende Darstellung bei einer weiteren Ausführungsform mit einem Drehantrieb;
- Figur 10: eine der Figur 9 entsprechende Darstellung bei einer weiteren Ausführungsform mit einem Drehantrieb;
- Figur 11: eine der Figur 9 und 10 entsprechende Darstellung bei einem Antrieb mit Hilfe eines Exzenters.

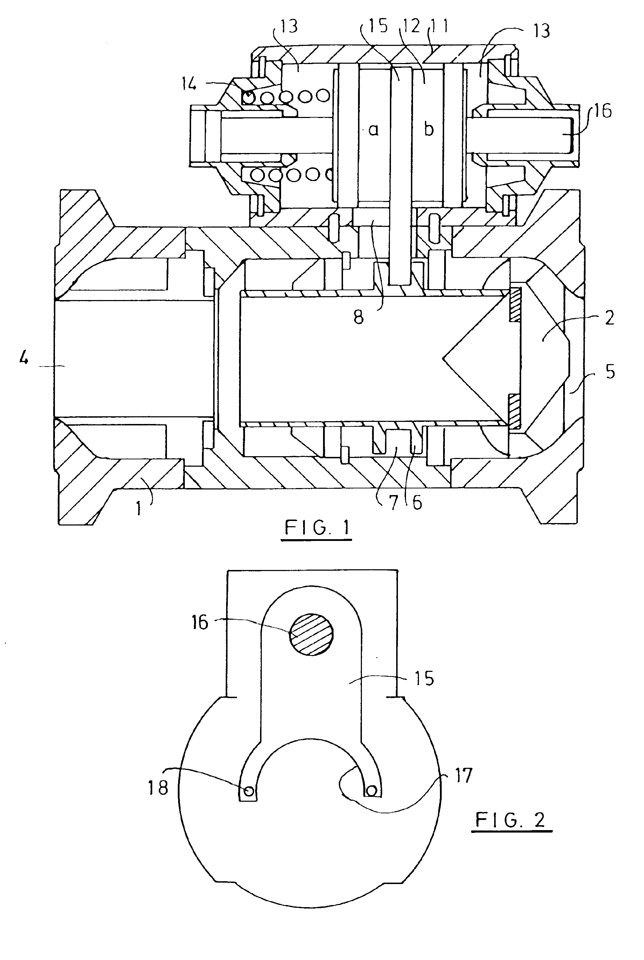

Figur 1 zeigt in einem stark schematisierten Längsschnitt ein Koaxialventil mit einem Ventilgehäuse 1, das die Form eines Rohrs aufweist. Es besteht aus mehreren zusammengesetzten Teilen. In dem Ventilgehäuse 1 ist ein Ventilsitz 2 angeordnet, der mit Halterungen in dem Inneren des Ventilgehäuses 1 zentriert wird. Als Ventilschließkörper ist in dem Ventilgehäuse ein Rohr verschiebbar geführt, dessen in der Figur 1 rechte Stirnkante auf dem Ventilsitz 2 aufsitzt. Das Ventilgehäuse weist an seiner einen Stirnseite, beispielsweise links in Figur 1, einen Einlass 4 und rechts einen Auslass 5 auf. Im dargestellten Zustand ist das Ventil geschlossen. Wenn der Ventilschließkörper 3 von dem Ventilsitz 2 abgehoben wird, ist das Ventil geöffnet.

Der Ventilschließkörper 3 weist an seiner Außenseite zwei umlaufende Rippen 6 auf, zwischen denen eine Nut 7 gebildet ist. Die Nut 7 läuft ebenfalls um den Umfang herum.

Die Wand des Ventilgehäuses 1 weist eine seitliche Öffnung auf. Die Öffnung 8 ist im Bereich der Stelle vorhanden, wo die umlaufende Nut 7 des Ventilschließkörpers 3 vorhanden ist. An dieser Stelle ist mit der Außenseite des Ventilgehäuses 1 ein zweites Gehäuse 11 verbunden, beispielsweise angeschraubt. Dieses Gehäuse 11 dient zur Unterbringung des Antriebs für den Ventilschließkörper 3. In dem Antriebsgehäuse 11 ist ein Kolben 12 abgedichtet verschiebbar geführt, der damit den Kolben eines Druckmittelzylinders bildet. Auf beiden Seiten des Kolbens 12 ist je ein Druckraum 13 gebildet, der dazu dienen kann, den Kolben 12 im Gehäuse 11 zu bewegen. Mit Hilfe einer Feder 14 wird der Kolben 12 in die dargestellte Normalposition beaufschlagt, in der er bleibt, wenn kein Druck anliegt. Der Kolben 12 besteht aus zwei Teilen 12 a, b, die unter Zwischenlage eines Übertragungselements 15 miteinander verbunden sind. Der Kolben 12 wird darüber hinaus mit einer Kolbenstange 16 verbunden, die durch abgedichtete Öffnungen in den Stirnwänden des Gehäuses 11 hindurch greift. Die Enden der Kolbenstange 16 können dazu dienen, von der Außenseite her eine optische Anzeige für die Position des Kolbens 12 zu liefern. Das Übertragungselement 15 greift, wie man dies schon an Figur 1 erkennen kann, in die Nut 7 des Ventilschließkörpers 3 ein. Wenn bei der Darstellung der Figur 1 in den Druckraum 13 rechts des Kolbens 12 Druck eingegeben wird, so wird der Kolben 12 gegen die Wirkung der Feder 14 nach links verschoben. Dabei bewegt er den Ventilschließkörper 3 mit, der auf diese Weise von dem Ventilsitz 2 abgehoben wird. Mit anderen Worten wird durch den Druckmittelzylinder mit dem Kolben 12 ein mechanischer Antrieb für den Ventilschließkörper 3 gebildet, wobei dieser mechanische Antrieb durch die Öffnung 8 in der Wand des Ventilgehäuses 1 hindurch greift.

Figur 2 zeigt einen Querschnitt durch die Anordnung der Figur 1 in der Höhe des Übertragungselements 15. Dieses Übertragungselement weist also die Form einer flachen Platte mit einer der Kolbenstange 16 entsprechenden Öffnung auf. Im unteren Bereich, das heißt dem dem Ventilschließkörper 3 zugewandten Bereich, ist das Übertragungselement 15 gabelartig ausgebildet, wobei die Innenseite der Gabel die Form eines halben Kreisbogens 17 annimmt. Dieser Kreisbogen 17 entspricht dem Außenumfang des Ventilschließkörpers 3 innerhalb der Nut 7. Im Bereich der beiden Enden 18 kann das Übertragungselement mit dem Ventilschließkörper 3 mechanisch verbunden sein, beispielsweise dann, wenn eine Verdrehung des Ventilschließkörpers 3 innerhalb des Ventilgehäuses 1 ausgeschlossen werden soll.

Bei der in den Figuren 1 und 2 dargestellten Ausführungsform ist die Bewegung des Ventilantriebs und des Ventilschließkörpers 3 parallel zueinander in der gleichen Richtung.

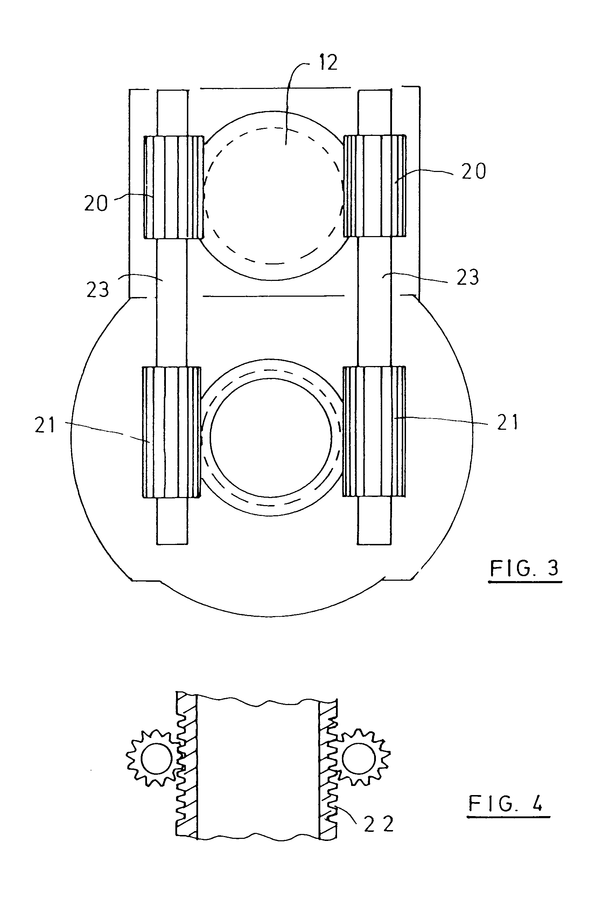

Die Figuren 3 und 4 zeigen eine Ausführungsform eines Ventilantriebs, bei dem der Ventilantrieb wiederum ein Linearantrieb ist, ähnlich wie bei der Ausführungsform nach Figur 1. Der linear bewegbare Kolben 12 weist an seiner Außenseite eine Verzahnung auf, ebenso wie der Ventilschließkörper 3. Mit der Verzahnung des Antriebskolbens 12 kämmt ein Zahnrad 20, das mit einem zweiten Zahnrad 21 wirkverbunden ist, das mit der Verzahnung 22 der Außenseite des Ventilschließkörpers 3 kämmt. Die beiden Zahnräder 20, 21 sitzen auf einer gemeinsamen Welle 23. Statt dessen könnte auch ein durchgehendes sehr langes Zahnrad verwendet werden. Aus Gründen der Symmetrie ist auf der gegenüberliegenden Seite die gleiche Anordnung getroffen. Auch in diesem Fall ist, wie bereits erwähnt, ein Linearantrieb für den Kolben 12 vorhanden. Es ist aber nicht erforderlich, dass der Kolben 12 mit Hilfe von Druckmittel angetrieben wird. Er könnte auch rein mechanisch mit Hilfe eines Motors angetrieben werden.

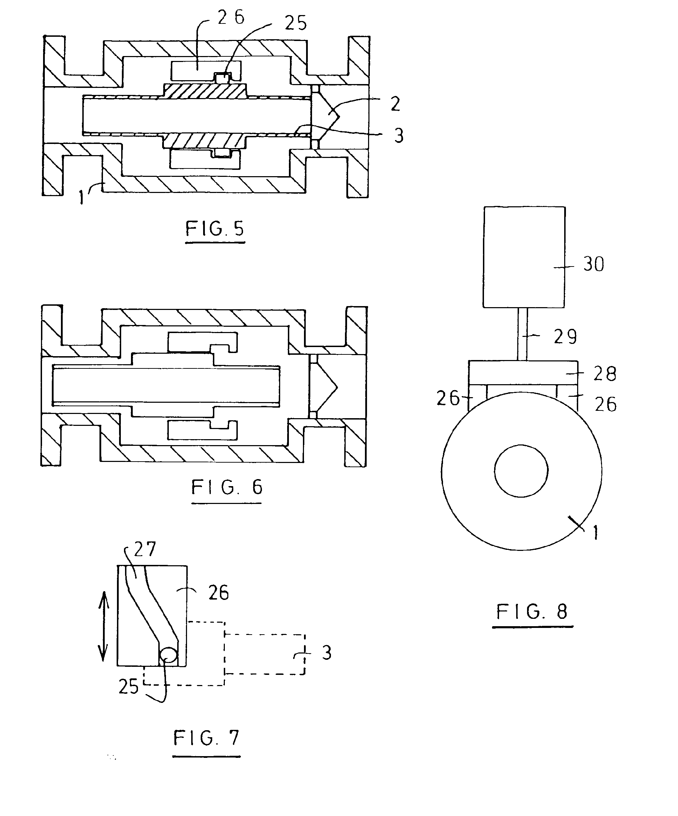

Bei der Ausführungsform der Figuren 5 bis 8 weist der Ventilschließkörper 3 an seiner Außenseite je einen Nocken 25 auf. Beide Nocken greifen in eine Nut je eines Schiebers 26 ein. Der Schieber kann durch entsprechende Öffnungen im Gehäuse in einer Richtung quer zur Längsrichtung des Ventilschließkörpers 3 verschoben werden. Figur 5 zeigt die Position, wo der Ventilschließkörper 3 auf dem Ventilsitz 2 aufsitzt. Wird nun der Schieber 26 senkrecht zur Papierebene verschoben, so folgen die Nocken 25 der Nut und verschieben dadurch den Ventilschließkörper 3. Diese Position ist in Figur 6 dargestellt.

Figur 7 zeigt eine Ansicht des Schiebers 26 mit der in ihm vorhandenen Nut 27. Der Nocken 25 greift in diese Nut 27 ein. Wird nun der Schieber 26 nach unten verschoben, so zwingt der Nocken 25 den Ventilschließkörper 3 nach links.

Figur 8 zeigt, wie die beiden Schieber 26 senkrecht zur Längsachse des Ventilgehäuses 1 bewegbar sind. Die beiden Schieber 26 werden durch einen Steg 28 miteinander verbunden, der über ein Übertragungselement 29 mit einem Antrieb 30 verbunden ist. Der Antrieb 30 stellt eine lineare Bewegung des Übertragungselements 29 und damit der beiden Schieber 26 her.

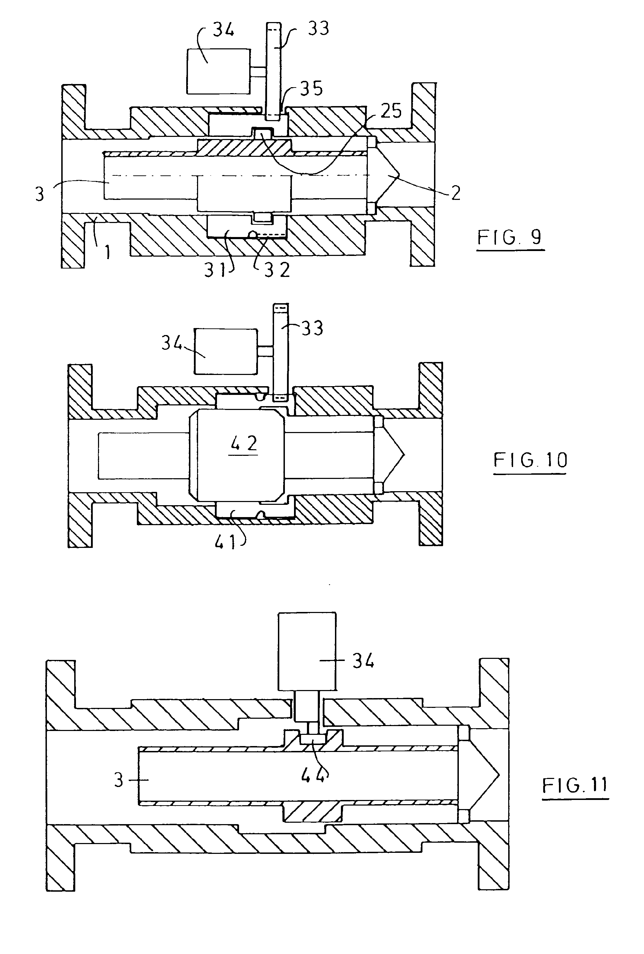

Figur 9 zeigt eine Ausführungsform, die ähnlich arbeitet wie die Ausführungsform der Figuren 5 bis 8. Wiederum ist an der Außenseite des Ventilschließkörpers 3 jeweils ein Nocken 25 angeordnet. Die Nut 27, die bei der Ausführungsform nach Figur 5 bis 8 in einem linear bewegbaren Schieber 26 angeordnet ist, ist jetzt in einer Drehhülse 31 vorhanden, die innerhalb des Ventilgehäuses 3 verdreht werden kann. Die Drehhülse 31 weist an ihrer Außenseite in ihrem einen Endbereich eine Verzahnung 32 auf. Mit dieser Verzahnung 32 kämmt ein Zahnrad 33 eines Elektromotors 34. Dieses Zahnrad 33 greift durch eine Öffnung 35 im Ventilgehäuse 1 hindurch. Durch eine Verdrehung der Drehhülse 31 ändert sich die Position der Nocken 25 und damit die Position des Ventilschließkörpers 3 gegenüber dem Ventilsitz 2.

Während bei der Ausführungsform der Figur 9 ein Nocken 25 in eine Nut der Drehhülse 31 eingreift, ist bei der Ausführungsform nach Figur 10 eine Verbindung zwischen der Drehhülse 41 und dem Ventilschließkörper 3 dadurch gegeben, dass die Drehhülse 41 an ihrer Innenseite ein Gewinde aufweist, das mit einem Außengewinde eines Gewindeansatzes 42 des Ventilschließkörpers 3 in Eingriff steht. Die Verbindung zwischen dem Zahnrad 33 und dem Außengewinde der Drehhülse 41 ist wiederum wie bei der Ausführungsform nach Figur 9 gestaltet.

Figur 11 zeigt als letzte von der Erfindung im Einzelnen vorgeschlagene Möglichkeit die Verwendung eines Exzenters. Der Elektromotor 34, dessen Drehachse jetzt senkrecht zur Längsachse des Ventilschließkörpers 3 verläuft, treibt einen Exzenter 44 an. Dieser Exzenter 44 greift in eine Aufnahme 45 an der Außenseite des Ventilschließkörpers 3 ein. Je nach Gestaltung der Aufnahme 45 kann dabei auch eine Verdrehung des Ventilschließkörpers 3 während seiner translatorischen Bewegung auftreten.

## Patentansprüche

1. Koaxialventil, mit
1.1 einem Ventilgehäuse (1) mit mindestens einem Einlass (4) und mindestens einem Auslass (5),
1.2 einem in dem Ventilgehäuse (1) angeordneten Ventilsitz (2),
1.3 einem mit diesem zusammenwirkenden Ventilschließkörper (3), sowie mit
1.4 einem Ventilantrieb, der
1.4.1 außerhalb des Ventilgehäuses (1) angeordnet ist und
1.4.2 durch eine Öffnung (8) in der Wand des Ventilgehäuses (1) hindurch mit dem Ventilschließkörper (3) mechanisch verbunden ist.

2. Koaxialventil nach Anspruch 1, bei dem der Ventilantrieb in einem eigenen mit dem Ventilgehäuse (1) verbundenen Antriebsgehäuse (11) angeordnet ist.

3. Koaxialventil nach Anspruch 1 der 2, bei dem der Ventilantrieb über mindestens ein Übertragungselement (15) mit dem Ventilschließkörper (3) verbunden ist.

4. Koaxialventil nach einem der vorhergehenden Ansprüche, bei dem der Ventilantrieb ein Linearantrieb ist, insbesondere ein Druckmittelzylinder.

5. Koaxialventil nach einem der vorhergehenden Ansprüche, bei dem die Bewegungsrichtung des Ventilantriebs parallel zur Bewegungsrichtung des Ventilschließkörpers (3) verläuft.

6. Koaxialventil nach einem der Ansprüche 1 bis 4, bei dem die Bewegungsrichtung des Ventilantriebs quer zur Bewegungsrichtung des Ventilschließkörpers (3) verläuft.

7. Koaxialventil nach einem der vorhergehenden Ansprüche, bei dem der Ventilantrieb einen Drehantrieb aufweist, insbesondere einen Elektromotor (34).

8. Koaxialventil nach einem der vorhergehenden Ansprüche, bei dem der Ventilantrieb über ein Getriebe mit dem Ventilschließkörper (3) verbunden ist.

9. Koaxialventil nach Anspruch 8, bei dem das Getriebe mindestens ein in eine Verzahnung des Ventilschließkörpers (3) eingreifendes Zahnrad (21) aufweist.

10. Koaxialventil nach einem der Ansprüche 4 bis 9, bei dem das Getriebe mindestens ein in eine Verzahnung des Antriebskolbens (12) eingreifendes Zahnrad (20) aufweist.

11. Koaxialventil nach einem der Ansprüche 8 bis 10, bei dem das Getriebe mindestens eine Nockenbahn und mindestens einen Nocken aufweist.

12. Koaxialventil nach Anspruch 11, bei dem die Nockenbahn und/oder der Nocken an einem linear bewegbaren Schieber (26) angeordnet ist.

13. Koaxialventil nach Anspruch 11, bei dem die Nockenbahn und/oder der Nocken an einer Drehhülse (31) angeordnet ist.

14. Koaxialventil nach einem der Ansprüche 8 bis 10, bei dem das Getriebe eine in ein Gewinde des Ventilschließkörpers (3) eingreifende durch den Antrieb verdrehbare Gewindehülse (41) aufweist.

15. Koaxialventil nach Anspruch 8, bei dem das Getriebe einen Exzenter (44) aufweist, der in eine Aufnahme (45) eingreift, insbesondere eine Nut.
